Europäisches Patentamt

European Patent Office

Office européen des brevets

(19)

(11) Veröffentlichungsnummer : **0 091 605**
**B1**

(12) EUROPÄISCHE PATENTSCHRIFT

(45) Veröffentlichungstag der Patentschrift :
12.02.86

(51) Int. Cl.⁴ : **G 01 N 21/00, G 02 B 21/24**

(21) Anmeldenummer : 83103100.0

(22) Anmeldetag : 29.03.83

(54) Mikroskopphotometer.

(30) Priorität : 08.04.82 DE 3213145

(43) Veröffentlichungstag der Anmeldung :
19.10.83 Patentblatt 83/42

(45) Bekanntmachung des Hinweises auf die Patenterteilung : 12.02.86 Patentblatt 86/07

(84) Benannte Vertragsstaaten :
AT CH DE GB LI

(56) Entgegenhaltungen :
CH-A- 494 950
DE-B- 2 729 024
FR-A- 2 153 723
FR-A- 2 262 811
JOURNAL OF THE OPTICAL SOCIETY OF AMERICA,
Band 63, Nr. 11, November 1973, Seiten 1345-1355,
J.M. ENOCH et al.: "Special microscope microspectrophotometer: Optical design and application to the
determination of waveguide properties of frog rods"
Informationsblatt Mikro Nr 31 "Zeiss-Mikrokopphotometersysteme" A41-825.7-d), 1978 von Carl Zeiss,
D.7082 Oberkochen
Die Akte enthält technische Angaben, die nach dem
Eingang der Anmeldung eingereicht wurden und die
nicht in dieser Patentschrift enthalten sind.

(73) Patentinhaber : **Firma Carl Zeiss**

**D-7920 Heidenheim (Brenz) (DE)**

(72) Erfinder : **Weber, Klaus, Dr.**
**Baumgartenweg 22**
**D-7923 Königsbronn (DE)**
Erfinder : **Schob, Wolfgang**
**Heckenrosenweg 40**
**D-7082 Oberkochen (DE)**

## Beschreibung

Die Erfindung betrifft ein Mikroskopphotometer mit einer in einer Zwischenbildebene angeordneten Blende mit rechteckförmiger Öffnung. Derartige Photometer sind z. B. dem Informationsblatt Mikro Nr. 31 « Zeiss-Mikroskop-Photometersysteme A41-825.7-d von 1978 der Fa. Zeiss, Oberkochen, zu entnehmen.

Bei bekannten mikrophotometrischen Anordnungen sind in der Regel vor dem zur Detektion benutzten Empfänger Meßblenden in einer zur Objektebene konjugierten Ebene angeordnet. Sie sind oft auswechselbar gestaltet, um verschiedene, in ihrer Form auf das zu erfassende Objektdetail abgestimmte Meßblenden verwenden zu können. Beispielsweise werden spalt- oder rechteckförmige Blenden benutzt, wenn bandenförmige bzw. langgestreckte Objektdetails untersucht werden sollen.

Die Einstellung des interessierenden Objektdetails auf die Meßblende erfolgt durch Verschieben der Probe in der Objektebene, entweder von Hand oder durch einen in zwei Richtungen (X, Y) motorisch verschiebbaren, sogenannten Scanningtisch, der auch ein sequentielles Abtasten der zu messenden Probenstruktur in beliebiger Richtung ermöglicht.

Aus der DE-C-2 729 024 ist es weiterhin bekannt, eine Abtastbewegung des Objektbildes über die Photometerblende durch gesteuertes Verschieben eines Linsengliedes in zwei Richtungen (X, Y) durchzuführen.

Bei rechteckförmigen Blenden, zum Beispiel Spaltblenden, ist jedoch auch eine winkelmäßige Orientierung von Blendenöffnung und Objektdetail nötig. Die Ausrichtung der Drehlage erfolgte bisher ausschließlich durch Manipulationen in der Objektebene, was während des Scanvorganges problematisch ist und beim Arbeiten mit großen Abbildungsmaßstäben einen Drehtisch erfordert, dessen Achse sehr genau mit der optischen Achse des Abbildungssystems übereinstimmen muß.

Es ist die Aufgabe der vorliegenden Erfindung, das winkelmäßige Ausrichten zwischen Meßblende und Objekt bei Mikroskopphotometern zu vereinfachen.

Diese Aufgabe wird dadurch gelöst, daß die Blende drehbar gelagert ist und mit einer Einstellhandhabe gekoppelt ist.

Da die Drehbewegung zwischen Objekt und Meßblende in einer Ebene erfolgt, in der ein vergrößertes Bild des Objekts vorliegt, sind an die Lagerung der drehbaren Blende keine besonders hohen Anforderungen zu stellen. Infolge der Entkopplung der Drehbewegung von der Objektebene kann zur Halterung des Objekts ein einfacher Kreuztisch benutzt werden, der, wenn eine automatische Abtastung des Objekts gewünscht wird, in zwei Richtungen motorisch angetrieben wird.

Dabei ist es von besonderem Vorteil, wenn die drehbare Blende mit einem Winkelgeber gekoppelt ist, dessen Ausgangssignal mit der Steuerelektronik für den Scanningtisch verbunden ist. Durch einfaches Drehen der Blende unter Sicht kann dann erreicht werden, daß die Abtastung auch längs einer gekrümmten Bahn derart erfolgt, daß z. B. die Längsrichtung der Blende stets senkrecht zu der abzutastenden Struktur orientiert ist. Das ist insbesondere bei der Photometrie unregelmäßig geformter biologischer Objekte (z. B. Chromosomen) vorteilhaft.

Liegt die Größe der zu photometrierenden Strukturen unterhalb der Schrittweite von ca. 0,5 µm, den gängige Scanningobjekttische besitzen, empfiehlt es sich, die Abtastbewegung in das Objektbild zu legen. Es ist dann zweckmäßig, die drehbare Blende senkrecht zu den Begrenzungsflächen ihrer Öffnung bewegbar zu lagern und z. B. einen elektromotorischen Antrieb vorzusehen, der der Blende eine lineare Abtastbewegung vermittelt.

Alternativ ist es möglich, anstelle einer bewegbaren Blende ein — natürlich drehbar gelagertes — Detektordiodenarray zu verwenden. Dabei werden Blende und Detektor jeweils durch ein einzelnes Element des Arrays gebildet und die Abmessungen des Elementes bestimmen die Größe der Blende.

Zur Anpassung der Größe der Blende an die zu untersuchende Objektstruktur kann es zweckmäßig sein, eine Blende mit veränderlichen Abmessungen, beispielsweise einen Spalt veränderliche Breite vorzusehen. Ein Lichtleiter kann zur Weiterleitung des vom Spalt ausgehende Lichtes und zur Anpassung der Spaltgeometrie an den Querschnitt der lichtempfindlichen Fläche des verwendeten Detektors dienen.

Weitere Vorteile werden bei der nachstehenden Beschreibung eines Ausführungsbeispiels anhand der Figuren 1-4 der beigefügten Zeichnungen deutlich :

Figur 1  zeigt die Prinzipskizze eines ersten Ausführungsbeispiels der Erfindung ;

Figur 2  zeigt die Prinzipskizze eines zweiten Ausführungsbeispiels der Erfindung ;

Figur 3  ist eine Schnittzeichnung durch eine konstruktive Ausführungsform des in Fig. 2 skizzierten Beispiels ;

Figur 4  ist eine detailliertere Schnittzeichnung des Teils 40 in Fig. 3 bei geändertem Maßstab.

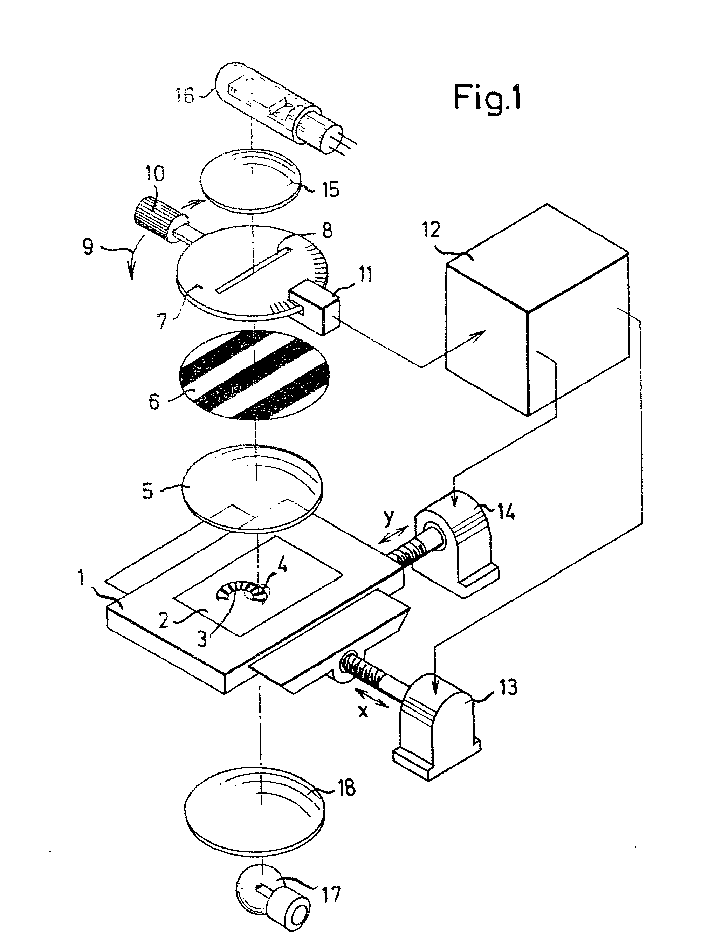

In Fig. 1 ist mit 1 ein in zwei Koordinatenrichtungen mit Hilfe der Motoren 13 und 14 verstellbarer Objekttisch gezeichnet, auf dem ein Objektträger 2 aufliegt. Auf dem Objektträger 2 befindet sich ein bandenförmig strukturiertes Objekt 3, das im Bereich des mit 4 bezeichneten Sehfeldes von der Lichtquelle 17 und der Optik 18 beleuchtet wird.

Das Sehfeld 4 wird von einer Optik 5 in der Ebene der Blende 7 zwischenabgebildet. Eine Linse 15 bildet die Austrittspupille des Objektivs 5 durch die spaltförmige Blendenöffnung 8 hindurch auf die lichtempfindliche Fläche eines Photodetektors 16 ab. Insoweit ist der prinzipielle Aufbau eines herkömmlichen Mikroskopphotometers beschrieben.

Erfindungsgemäß ist die Blende 7 wie durch den Pfeil 9 angedeutet wird, drehbar gelagert und läßt sich mit einer vom Benutzer zu betätigenden Handhabe 10 so drehen, daß der Spalt 8 sich parallel zur Richtung der Bandenstrukturen im Zwischenbild 6 erstreckt. Ein mit der Blende 7 gekoppelter Winkelgeber 11 meldet die Drehlage des Spalts 8 der Steuerelektronik 12, die aus dem Ausgangssignal des Winkelgebers 11 die Antriebsgeschwindigkeiten der Schrittmotoren 13 und 14 so berechnet, daß der Tisch 1 senkrecht zur Spaltrichtung läuft.

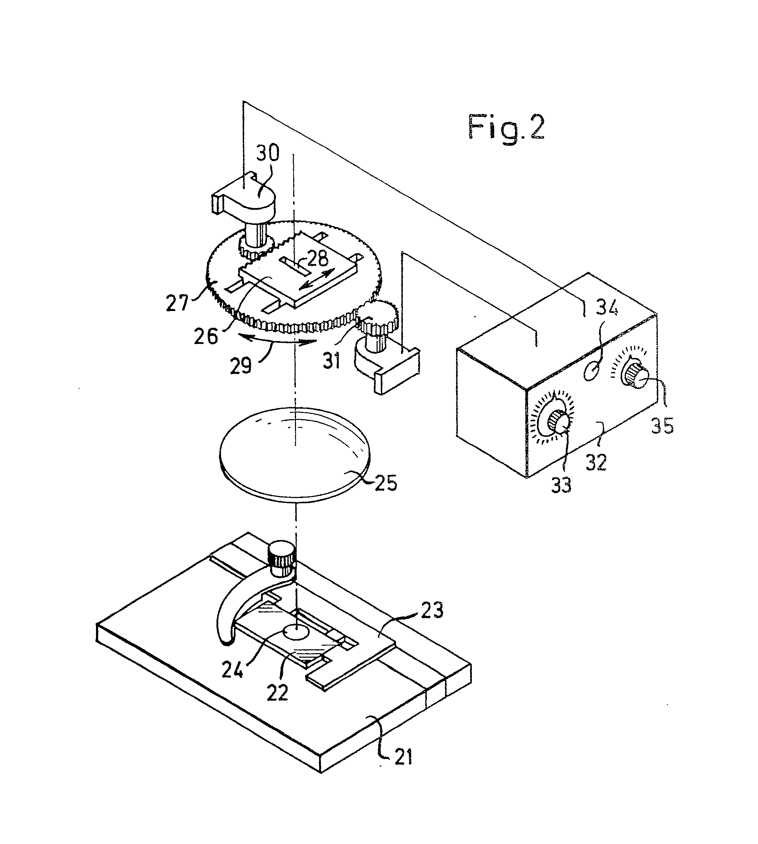

Fig. 2 skizziert ein zweites Ausführungsbeispiel, bei dem das Sehfeld 24 einer vom Objekthalter 23 geklemmten Probe 22 von der Abbildungsoptik 25 in die Ebene des sowohl drehbar als auch verschiebbar gelagerten Spalts 28 abgebildet wird. Zur Drehung des Blendenträgers 27 (vgl. Pfeil 29) und zur Verschiebung der darauf bewegbar gelagerten Blende 26 dienen Antriebe 31 bzw. 30, die von einem zentralen Bedienteil 32 gesteuert werden.

Das Bedienteil weist einen Einstellknopf 33 für die Drehlage des Spaltes 28 sowie einen Taster 34 für das Starten und einen Knopf 35 zur Einstellung der Geschwindigkeit der Abtastbewegung der Blende 26 auf. Für diesen Photometeraufbau wird nur ein einfacher Kreuztisch 21 benötigt, mit dem die Probe 22 von Hand zum Aufsuchen interessierender Strukturen verschoben wird.

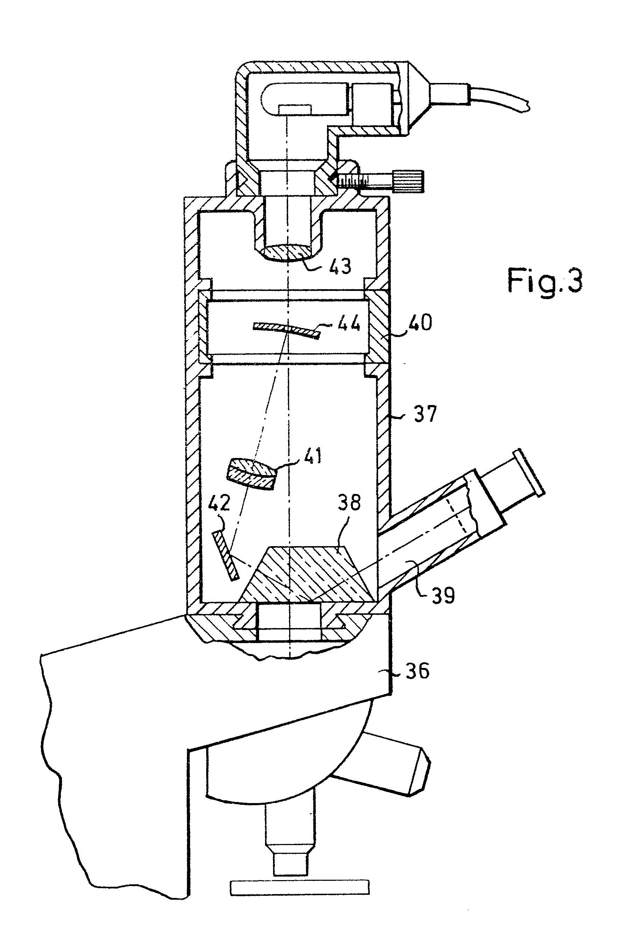

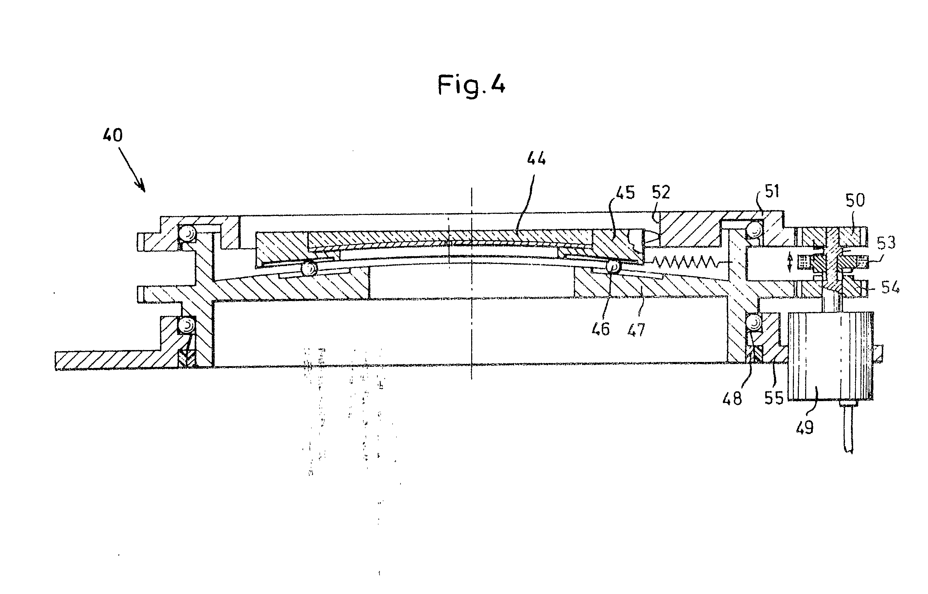

Fig. 3 und 4 zeigen die konkrete konstruktive Ausführung dieses Beispiels : aus den Objektivträger 36 eines Mikroskops ist ein kompakter Photometertubus 37 aufgesetzt, in dem ein Prisma 38 untergebracht ist, das in dem vom Objektiv kommenden, senkrecht auffallenden Strahlengang als Planplatte wirkt. Im oberen Teil des Tubus 37 ist der in Fig. 4 detaillierter gezeichnete Blendeneinschub 40 untergebracht. Dort entsteht auf einer verspiegelten, etwas gegen die optische Achse des einfallenden Strahlenganges geneigten Blende 44 ein Zwischenbild, das zurückgespiegelt von der Optik 41, dem Umlenkspiegel 42 und der Basisfläche des Primas 38 in den Binokulartubus 39 reflektiert wird, wo ein Bild des Umfeldes der Öffnung der Blende 44 entsteht.

Die Linse 43 bildet die Austrittspupille des Objektivs durch die Blendenöffnung hindurch auf die lichtempfindliche Fläche eines auf dem Photometertubus 37 aufgeflanschten Photomultipliers ab.

Wie Fig. 4 zeigt, besteht die Blende 44 aus einer verspiegelten, leicht konkav gekrümmten Glasplatte, deren Träger 45 über Rollen 46 auf einen drehbaren Ringeinsatz 47 verschiebbar ist. Der Einsatz 47 ist über eine Reibungsbremse 48 mit dem gehäusefesten Teil 55 des Blendeneinschubes 40 gekoppelt.

Zur Einleitung einer linearen Abtastbewegung der Blende 44 dreht der Motor 49 mit dem Ritzel 50 einen gegenüber dem Einsatz 47 drehbar gelagerten Ring 51, dessen Innenseite eine Steuerkurve 52 aufweist, an die der Blendenträger 45 angefedert ist.

Gedreht wird die Blende, in dem über die Magnetkupplung 53 ein weiteres Ritzel 54 mit der Antriebswelle des Motors 49 verbunden wird. Das Ritzel 54 treibt den Einsatz 47 an.

Der vorstehend beschriebene Einsatz 40 kann gegen weitere Einsätze, die beispielsweise einen Lochblendenrevolver enthalten, ausgewechselt werden.

## Patentansprüche

1. Mikroskopphometer mit einer in einer Zwischenbildebene angeordneten Blende (7 ; 26, 27 ; 44) mit rechteckförmiger Öffnung (8 ; 28), dadurch gekennzeichnet, daß die Blende (7 ; 26, 27 ; 44) drehbar gelagert ist und mit einer Einstellhandhabe (10 ; 33) gekoppelt ist.

2. Photometer nach Anspruch 1, dadurch gekennzeichnet, daß die drehbare Blende (7) mit einem Winkelgeber (11) gekoppelt ist.

3. Photometer nach Anspruch 2, dadurch gekennzeichnet, daß das Ausgangssignal des Winkelgebers (11) mit der Steuerelektronik (12) für einen die zu untersuchende Probe (2) in der Objektebene gesteuert bewegenden Objekttisch (1) verbunden ist.

4. Photometer nach Anspruch 1 oder 2, dadurch gekennzeichnet, daß die drehbare Blende (26 ; 44) senkrecht zu einer der parallel zur optischen Achse liegenden Begrenzungsflächen ihrer Öffnung (28) bewegbar gelagert ist.

5. Photometer nach einem der Ansprüche 1-4 dadurch gekennzeichnet, daß eine Feldlinse (15 ; 43) hinter der Blende (7 ; 44) die Austrittspupille des Objektivs wahlweise direkt auf einen Empfänger (16) oder auf die Eintrittsfläche eines Lichtleiters abbildet.

6. Photometer nach einem der Ansprüche 1-5 dadurch gekennzeichnet, daß die Blende veränderliche Abmessungen besitzt.

7. Photometer nach Anspruch 4, dadurch gekennzeichnet, daß der Antrieb für beide Blendenbewegungen durch einen Motor (49) sowie eine schaltbare Kupplung (53) erfolgt.

8. Photometer nach einem der Ansprüche 1-4 dadurch gekennzeichnet, daß die Blende durch einzelne Elemente einer Diodenzeilendetektoranordnung gebildet ist.

9. Photometer einem der Ansprüche 1-8, dadurch gekennzeichnet, daß die drehbare Blende (44) in einem auswechselbaren Blendeneinsatz (40) eines auf den Träger (36) des Mikroskops aufsetzbaren Photometergehäuses bzw. Gehäusebausteins (37) angeordnet ist und gegen weitere Einsätze, beispielsweise einen Lochblendenrevolver, ausgetauscht werden kann.

10. Photometer nach einem der Ansprüche 1-9, dadurch gekennzeichnet, daß die objektseitigen Flächen der Blende (44) verspiegelt sind.

## Claims

1. A microscope photometer having a diaphragm (7 ; 26, 27 ; 44) which is arranged in an intermediate-image plane and has a rectangular aperture (8 ; 28), characterized by the fact that the diaphragm (7 ; 26, 27 ; 44) is mounted for rotary displacement and is coupled with manipulation means (10 ; 33).

2. A photometer according to claim 1, characterized by the fact that the rotatable diaphragm (7) is coupled to an angle encoder (11).

3. A photometer according to claim 2, characterized by the fact that the output signal of the angle encoder (11) is connected with control electronics (12) for a microscope stage (1) for controlled movement of the specimen (2) to be inspected in a specimen plane.

4. A photometer according to claims 1 or 2, characterized by the fact that the rotatable diaphragm (26 ; 44) is mounted for movement perpendicular to one of those limiting surfaces of its aperture (28), which are parallel to the optical axis.

5. A photometer according to one of the claims 1 to 4, characterized by the fact that a field lens (15 ; 43) behind the diaphragm (7 ; 44) focuses the exit pupil of the objective optionally directly onto a receiver (16) or onto the entrance surface of a light guide.

6. A photometer according to one of the claims 1 to 5, characterized by the fact that the diaphragm is of variable dimensions.

7. A photometer according to claim 4, characterized by the fact that the driving of both diaphragm movements is effected by a motor (49) and a shiftable clutch (53).

8. A photometer according to one of the claims 1 to 4, characterized by the fact that the diaphragm is formed by individual elements of a diode line-detector arrangement.

9. A photometer according to one of the claims 1 to 8, characterized by the fact that the turnable diaphragm (44) is arranged in a replaceable diaphragm slide-in unit (40) of a photometer housing or housing module (37) which can be placed on the holder (36) of the microscope and can be replaced by other units, a revolving-disk diaphragm, for example.

10. A photometer according to one of the claims 1 to 9, characterized by the fact that the specimen-side surfaces of the diaphragm (44) are reflecting.

## Revendications

1. Microscope-photomètre équipé d'un diaphragme (7 ; 26, 27 ; 44) à ouverture rectangulaire (8 ; 28) disposé dans le plan d'image intermédiaire, caractérisé en ce que le diaphragme (7 ; 26, 27 ; 44) est orientable par rotation et accouplé à un dispositif de réglage (10 ; 33).

2. Photomètre selon la revendication 1, caractérisé en ce que le diaphragme tournant (7) est accouplé à un indicateur angulaire (11).

3. Photomètre selon la revendication 2, caractérisé en ce que le signal de sortie de l'indicateur angulaire (11) est transmis à l'électronique (12) qui commande une platine porte-objet (1) déplaçant le spécimen à examiner (2) dans le plan-objet.

4. Photomètre selon la revendication 1 ou 2, caractérisé en ce que le diaphragme tournant (26 ; 44) peut être déplacé perpendiculairement aux surfaces limitant l'ouverture (28) qui sont parallèles à l'axe optique.

5. Photomètre selon l'une des revendications 1 à 4, caractérisé en ce qu'une lentille de champ (15 ; 43) disposée derrière le diaphragme (7 ; 44) reproduit la pupille de l'objectif, soit sur un récepteur (16) directement, soit sur la face d'entrée d'un conducteur de lumière.

6. Photomètre selon l'une des revendications 1 à 5, caractérisé en ce que le diaphragme présente des ouvertures de dimensions variables.

7. Photomètre selon la revendication 4, caractérisé en ce que le diaphragme est entraîné selon les deux sens de mouvement précités par un moteur (49) et par l'intermédiaire d'un embrayage (53).

8. Photomètre selon l'une des revendications 1 à 4, caractérisé en ce que le diaphragme est formé des différents éléments d'un détecteur composé de lignes de diodes.

9. Photomètre selon l'une des revendications 1 à 8, caractérisé en ce que le diaphragme tournant (44) est disposé dans l'élément porte-diaphragme échangeable (40) d'un boîtier de photomètre ou d'un module porte-photomètre (37) adaptable au statif du microscope (36), et qu'il peut être échangé contre d'autres éléments, un révolver portant diaphragmes fixes circulaires par exemple.

10. Photomètre selon l'une des revendications 1 à 9, caractérisé en ce que les surfaces du diaphragme (44) opposées à l'objet sont traitées anti-reflets.

0 091 605

Fig.1

1

Fig.2

Fig.3

# Fig.4

0 091 605